# EUROPEAN PATENT APPLICATION

(11) **EP 1 151 795 A2**
(43) Date of publication of application: **07.11.2001**
(21) Application number: 01110846.1
(22) Date of filing: 04.05.2001
(51) Int. Cl.: B01L 11/00, B67C 3/02, G01F 23/292

(54) **Device and method for filling containers**

(30) Priority: 05.05.2000 IT BO000257
(71) Applicant: Steroglass S.R.L, 06079 San Martino in Campo (Perugia) (IT)
(72) Inventor: Falocci, Roberto, 06079 San Martino in Campo, Perugia (IT); Cizza, Lucio Gaetano, 21057 Olgiate Olane, Varese (IT)
(74) Representative: Negrini, Elena

(57) **Abstract**

A device for filling a container (200) provided with a back-sight (202) including: visual bearing means (30) directed toward the container (200); filling means (40) connected to liquid delivering means (50) into the container (200); an unit (20) controlling the visual bearing means (30), the filling means (40) and the delivery means (50), fit to sequentially activate, in correspondence of a filling condition, the visual bearing means (30), receiving therefrom signals related to the container (200) to detect the back-sight (202).

The filling means (40) through the delivering means (50) pour liquid into said container (200) until the unit (20) deactivates these latter when the liquid level reaches the back-sight (202).

The liquid level is detected by continuously comparing the signals received from said visual bearing means (30) related to the back-sight (202) with the liquid level progressively increasing inside the container (200).

## Description

The present invention refers to devices and methods for filling containers with liquid up to the achievement of predefined liquid or solid and liquid volumes.

Particularly the invention refers to a device arid a method for filling containers up to a back-sight of these latter, eventually previously partially filled with products whose volume is not necessarily known, mainly for laboratories and chemical, biochemical, pharmaceutical, cosmetic, food, packaging industries and similar.

In the chemical laboratories and similar there is the problem to fill with liquid containers, for instance volumetric flask, in which there are already elements or products with unknown volume, up to the achievement of a back-sight, generally a horizontal annular notch, painted, silver-screen printed or engraved in the upper part of the container, which indicates the achievement of the nominal volume of said container.

The container filling operation until the surface of the filling liquid corresponds to the back-sight, is namely defined as "setting" the container volume.

The liquids, for instance distilled water, contacting the inner walls of the containers, have a meniscus, generally negative, which shows the back-sight of the achieved filling.

The meniscus of opaque liquids, or liquids made opaque by the solute, is not transversally visible and the filling level is set below the visible line transversally defined by the upper portion of the liquid contacting the container inner surface.

The known automatic filling devices are enable to set the container volume since they deliver preset liquid amount while the volume setting operation requires that the delivered liquid is exactly the amount needed to achieve the container nominal volume aside from the material volume previously fit into the container.

The only known way to set the container volume, particularly the volumetric flask, consist in manually operating using means such as dispenser, pipettes, stactometer and similar.

In fact the operator manually pours the liquid to set the container volume, trying to make the liquid flowing along the inner surface of the container neck without perturbing the meniscus. At the same time the operator must: position one of his eye exactly along the back-sight plan to minimize the parallax error, must take under control the meniscus raising, must interrupt the filling trying to exactly match the back-sight with the liquid meniscus.

If the meniscus overcomes the back-sight, the operation fails irreversibly.

A serious drawback of said known filling means and modes to set the volume of a container having a back-sight consists in the low precision and the insufficient reproducibility which are achieved with the consequence of invalidating the results of expensive search programs.

A further drawback consists in the difficulty and the long times needed for executing the operation that keeps busy a qualified, consequently expensive operator, to make a job requiring only skill.

A further drawback consists in the difficulty to verify the correspondence between the filling level and the back-sight in case of opaque liquids.

Another drawback consists in that the operator's head is near the container and consequently subject to the effects of possible product leakage or exhalations caused by reactions, which can be developed during the filling.

The main object of the present invention is to propose a device and a method for the volume setting of a container having a back-sight with high and known precision and the total reproducibility of the results of the same operation.

A further object is subtracting the operators from the potential inherent risks in the volume setting operation and drastically reducing the contamination risks.

Other object consists in allowing the volume setting operation, filling the container with a predefined liquid amount, in a short time and with high precision and repeatability independently of the operator's experience and skill.

A further object of the present invention consists in proposing a device suitable to carry out correctly the volume setting, even using liquid opaque or turbid.

Another object is the possibility to automatically set the volume of containers having any kind of dimensions, geometric characteristics, transparency and material refractive indexes and having back-sight with notches of any characteristics.

The objects above described are achieved according to the content of the claims.

The characteristics of the invention are underlined in the following with particular reference to attaches drawings, in which:

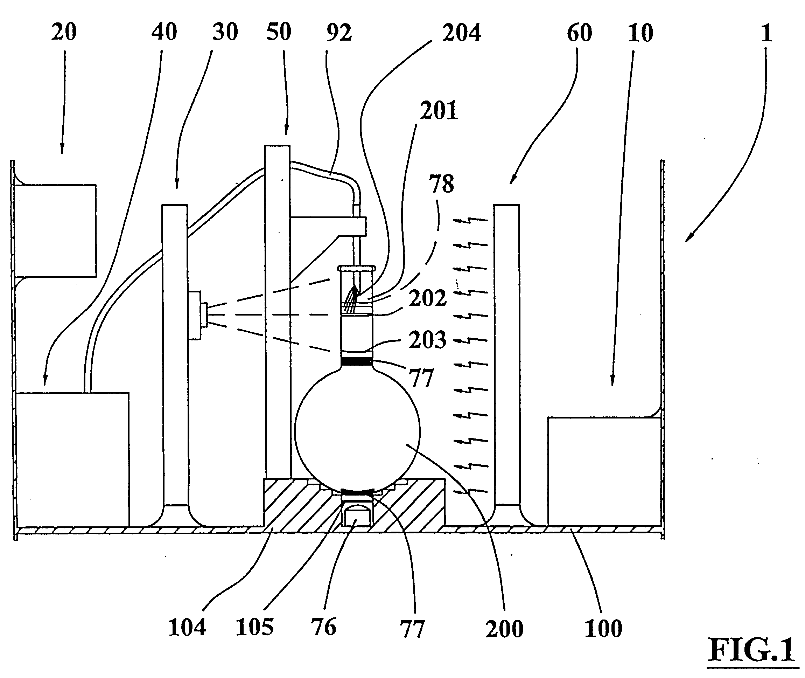

- figure 1 shows a schematic view of the device object of the invention, in which some parts have been removed for better underlining others, in a filling condition of a container;

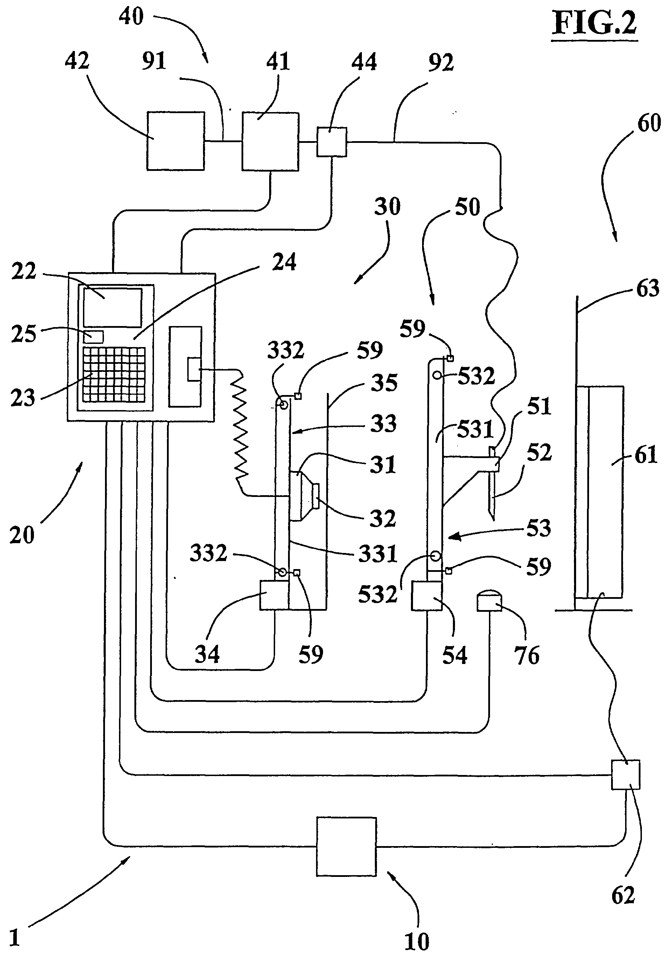

- figure 2 shows a schematic view of the device of figure 1 without, for simplicity of comprehension, some elements such as the related electric connections;

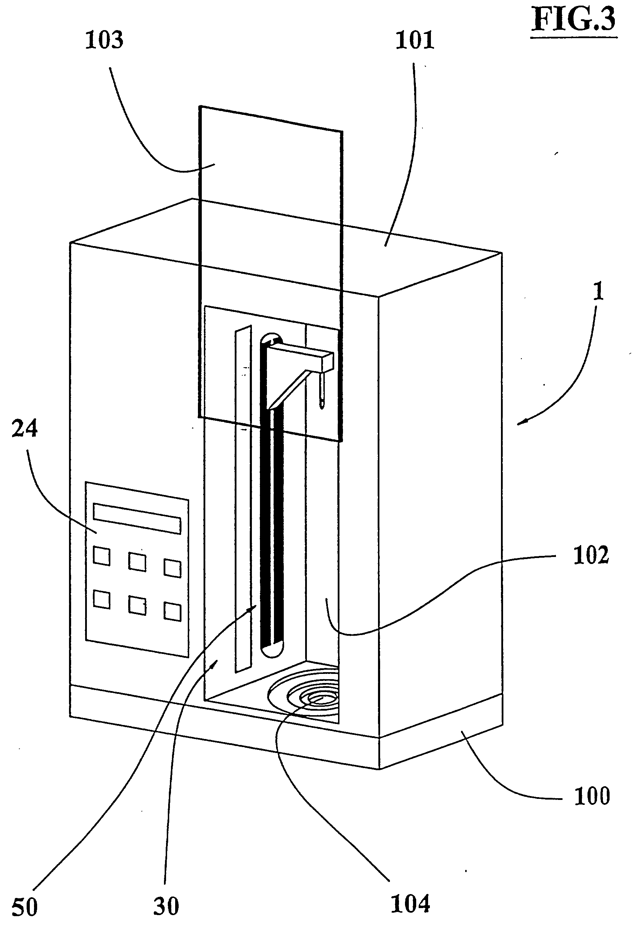

- figure 3 shows a perspective view of the device.

With reference to figures from 1 to 3, numeral 1 indicates the device object of the present invention.

Power supply means, for instance of switching type, are indicated with numeral 10.

Numeral 20 indicates a control and management unit powered by power supply means 10 through connecting means.

Visual bearing means 30, are in communication and connected with the unit 20 through linking means.

Filling means 40 are in communication with the unit 20 through connection means.

Numeral 50 indicates delivering means connected to the unit 20 through related connection means and in flow communication with the filling means 40 by means of second pipes 92.

Numeral 100 indicates the frame means for the mechanical connection of all the means and elements and including a positioning seat 104 of the container 200 to fill in correspondence of the delivering means 50.

Lighting means 60 approximately facing the visual bearing means 30, with respect to the position of the container 200 on the frame 100.

Code scanner means 76 are connected to the unit 20 to which they send codes and/or information sensed by the coding means 77 associated with the containers 200.

The control and management unit 20 has at least an user interface 24 including keyboard means 23 and display means 22 respectively consisting of, for instance, a symbolic or alphanumeric keyboard and a LCD-type, TFT or CRT screen, otherwise both integrated in a "Touch Screen" type screen. The user interface can further include alarm means 25.

The control means 20 further include memories, for instance of RAM and/or EEPROM or FLASH-EPROM type; processing unit, for instance of microprocessor type; interface devices, for instance, of digital analogical converters type, for cameras CCD, for PLC, for serial and/or parallel type connections and power interfaces suitable to operate electric actuator devices.

The visual bearing means 30 include second window means 35 substantially constituted of transparent material for the protection of said visual bearing means 30; an optical objective 32, for instance of triplet with diaphragm type, associated to optical sensor means 31, for instance, of the CCD Array type or charge coupling devices with sensitive elements positioned along a linear segment fit to sense photometric profiles of the focused areas.

The optical sensor means 31 are optically oriented in direction of the centerline of the container 200 along an offset line ranging between 2 to 10 mm. This misalignment causes, because of an optic phenomena, the darkness of the lower portion of the meniscus 202 increasing the capability of the optical sensor means 31 to detect the position of the meniscus 202.

The optical sensor means 31 are connected by related connection means to the unit 20 suitable to convert, to elaborate and to analyze, the luminous information acquired by the CCD in order to extract information inherent the positions of the back-sights and filling levels of the containers 200.

The optical sensor means 31 are associated and vertically moved by first translator means 33 operated by first actuator means 34 activated by the unit 20 through the connecting means.

The first translator means 33 are essentially constituted by a belt 331 vertically fixed between two pulleys 332, the upper one is idle and the lower one is rotated by first actuator means 34.

The filling means 40 include tank means 42 of the liquid 204 that, for instance, can consist of a tank positioned internally or externally of the device 1 and connected by first hoses 91 to pumping means 41 activated by the unit 20. The pumping means 41 may consist, for instance, in a rotating piston reciprocating pump, or in a magnetic driven gear pump, or in a peristaltic pump connected by means of second hoses 92, flexible and elastic, up to the delivering means 50. The pumping means 41 have an electric motor of varying speed type or an actuator that is operated by the unit 20 in such a way to impose the liquid flow rate value 204.

Said rotating piston reciprocating pump is a valveless high capacity pump driven by a step motor having the parts in contact with liquids made of PTFE material. The rotating piston reciprocating pump allows to use the device for high precision filling of a container with a predetermined liquid amount.

Downstream the pumping means 41 there is a stop valve 44 of the liquid flow 204 in the second hoses 92, electrically connected and controlled by the unit 20.

The delivery means 50 include tube means 52, for instance consisting of a hollow rod with the free end shaped for directing the liquid flow toward the wall of the container 200, in flow communication with the second hoses 92. The tube 52 is fix by supporting means 51 to second translator means 53, operated by second actuator means 54 activated by the unit 20 through the connecting means.

The first translator means 53 are essentially constituted by a belt 531 vertically fixed between two pulleys 532, the upper one is idle and the lower one is rotated by first actuator means 54.

Each of the translator means, first 33 and second 53, includes a couple of stop means 59 positioned at the ends of the respective translator means and suitable to send a related signal to the unit 20, when reached by the optical sensor means 31.

The lighting means 60 include first window means 63 constituted of transparent material for the protection of light source means 61 constituted, for instance, by at least a vertical rectilinear line of light emission diodes, so called LED array, with said diodes powered through the connecting means by light adjusting means 62, for instance of adjustable current type, fit for varying luminous intensity of the diodes according to the related signals sent by the unit 20 through the connecting means.

The light source means 61 preferably consist of a LED array having two vertical and parallel series of green LEDs housed in a plastic container provided with a window made of an optic material for the LED's light diffusion. The diffusion window is approximately 20 mm large and 250 mm high.

It is provided that the supporting frame 100 has an external cover 101 for containment and protection having, in correspondence of the positioning area of the container 200, an opening 102 closed by a door 103, hinged to the cover 101 or vertically sliding.

It is provided that the second window means 35 and, eventually, first 63 are constituted by a first optical filtering material and that the door 103 is made of a second optical filtering material complementary to the first one. In this way possible light reflections coming from the outside of the door do not affect the optical sensor 31, being absorbed or attenuated by the second window means, allowing at the same time the vision from the outside of the positioning area of the container 200.

It is provided that chromatic or linear polarized filters are the optical filtering materials, for instance the second window means 35 can be made of a polarized filter with polarization planes orthogonal to the planes of the polarized filter constituting the door 103.

The device operation provides to start the filling condition, after the positioning of the container 200 into the positioning seat 104, by means of related commands set on the keyboard means 23.

After the start, the unit 20 operates the second actuator means 54 of the delivering means 50, causing the insertion of the tube means 52 into the mouth 201 of the container 200 up to a preset height higher than the back-sight 202.

The unit 20 imposes on the visual bearing means 30 a vertical motion of the optical sensor 31 during which this latter transmits to the unit signals related to the image of the container 200. The unit 20 elaborates and analyzes the signals for searching the brightness run referring to the back-sight. If the optical sensors are a linear vertically positioned sensor, the objective 32 focuses on said sensor the image of a narrow vertical portion of the container 200, whose amplitude mainly depends on the focal length of the objective 32. To guarantee the contemporary focusing of the portions facing the objective 32 and opposite to the container 200 in the area having the back-sight 202, that is to get a sufficient depth of focus, the objective will be preferably selected with a short focal length and small relative opening obtained, for instance, by means of stop. Low brightness due to the small opening is compensated by the sensibility of the optical sensors of CCD type and by the light intensity provided by the lighting means 60.

The unit 20 controls the vertical translation of the optical sensor 31 up to the achievement of signals related to the profile of the back-sight 202 having the smallest vertical extension, so obtaining the alignment between optical axle of the objective 32 and back-sight 202. The level or height of the back-sight 202 corresponds to the mean between the heights of the upper and lower borders of the profile.

The unit 20 activates a preset driving sequence of the pumping means 40 valuing with continuity the signals coming from the visual bearing means. When the signals indicate the entry in the visual field of the group objective 32-optical sensor 31 of the meniscus or the filling line or the reaching by these latter of a predetermined distance from the back-sight 202, the unit activates the last filling sequence. The unit 20 operates the pumping means 41 in such a way to have flow rates progressively lower, interrupted by flow stops provided for the stabilization of the liquid/air interface. The last filling sequence which occurs with a low flow rate ranging from 1/5 to 1/100, preferably 1/20, of the container capacity per minute, provides an initial stop of a preset duration, needed for the absorption of possible foams and the exhaustion of dynamic phenomenons that can cause perturbations to the interface between the liquid 204 and the air.

In correspondence of the back-sight reaching by the filling level 203, the unit 20 stops the filling.

The unit 20 operates the valve 44, for instance of the normally closed, in order to allow a liquid flow only in correspondence of the driving of the pumping means 41. The valve 44 can be a clamp, suitable to interrupt the flow along the second hoses 92 causing a squeezing of these latter.

The unit 20 can alarm through the alarm means 25, for instance consisting of a warning horn, if anomalies occur or functions are not executed, such as for instance the identification of the back-sight 202 or of the filling level 203, within predetermined periods of time starting from the execution of the filling commands.

In case of filling done with transparent liquids, the unit 20 calculates the filling level 203 equal to the meniscus lower level. In case of opaque liquids, in which the meniscus is hidden at the side view by the same liquid, the unit 20 calculates the filling level 203 equal to the level of the filling line, eventually deducting a predefined amount of liquid from said filling line.

The unit 20 uses the filling calculation for transparent or opaque liquids on the basis of commands manually given to the keyboard means 23 in correspondence of the filling activation. With the commands related to the opaque liquids data, inherent to the predefined amount to be deducted, are also provided by the unit 20, in order to obtain the real level filling. Usually, for the common accuracy requests and with middle or big size containers, the filling line level of the opaque liquids and the real filling level are equivalent; in this case the predefined quantity to be deducted is set equal to zero. The correction of the filling level with respect to the filling line is executed only in correspondence of request of very high precision or for the filling of containers having particular form or dimensions.

In a variant of the device 1, the unit 20 manages the liquid as transparent or opaque on the basis of the photometric profile sensed by the optical sensor 31. The unit 20 considers a profile characterized by two or three spikes of brightness decrease, one or two of which are related to the back-sight 202 and one relates to meniscus, as related to a transparent liquid; a step profile followed by one or two spikes of brightness decrease is considered such as opaque liquid; in this last case the real filling level can be precisely calculated by the unit 20, applying an elaboration algorithm of parameters related to the brightness profile step.

When the filling reaches the back-sight 202, the unit 20 operates the second actuators means 54, leading the tube means 52 to the maximum elevation.

In correspondence of the manual setting of the device driving commands, data can be input by the keyboard means 23 and checked through the display means 22, said data being related to the container and eventually to the content and the filling liquid, for instance approximate capacity and height of the back-sight and the container mouth and liquid opacity, in order to make quicker the filling and/or to improve the safety.

The unit 20 may have an upgradeable database containing identifying codes for each typology of container in biunique association with the related data inherent the nominal volume, height intervals to which the mouth of the container 200 and the back-sight 202 are positioned, light transmissive and refractive indexes of the material constituting the container 200, and others possible. In this case it will be sufficient to key on the keyboard means 23 the code related to the type of container so that the unit 10 uses the related data contained in the database.

It is provided that the device 1 has code scanner means 76, for instance bar codes, connected to the unit 20 and suitable to read a code, for instance identifying the typology of the container 200, included in the coding means 77, for instance consisting of a bar code on the same container 200.

The code scanner means 76 can be positioned under a protective window 105 carried out at the bottom of the positioning seat 104 of the container 200, having the coding means 77 on its bottom; alternatively or contemporarily the code scanner means 76 can be positioned inside the opening 102 for sensing the codes positioned sideways to the containers 200.

Furthermore, it is provided that, contemporarily or alternatively to the coding means 77, the unit 20 has means, for instance decoding programs, fit to read the signals sensed by the visual bearing means 30 and related to bar codes 78 positioned in correspondence of the mouth portion 201 above the back-sight 202.

The encoded data in the bar code can identify the typology of the container 200.

Obviously the encoded data on the container 200, through the coding means 77 or bar codes 78, and read by the code scanner means 76 or sensed by the visual bearing means 30, can directly include the characteristics of the related container, in such a way to allow the use by the unit 20 without needing a database related to the characteristics of each container.

The method for filling containers 200 includes the phases of:
- to align the point of view at the same level of the back-sight 202, minimizing the parallax error, vertically moving the point of view up to minimize the vertical thickness of the back-sight 202;
- to define the average level of the back-sight 202 as a mean between the minimum and maximum levels of the portions of the back-sight 202;
- to display a container portion underlying the back-sight 202 and extending for a length at least equal to the container diameter in correspondence of the back-sight 202;
- to fill the container with a liquid flow 204 ranging from a fourth and the quadruple of the nominal capacity of the container per minute;
- to stop the filling when the filling level 203 reaches a predefined level underlying the back-sight;
- to wait for the stabilization of the fluid and the exhaustion of possible foams and/or bubble for a time interval between 1 and 30 seconds;
- to fill the container with a liquid flow 204 ranging from a fifth and a hundredth of the nominal capacity of the container per minute;
- to stop the filling when the filling level 203 reaches a level equal to the average level of the back-sight 202.

The method can further include the phases of:
- to generate an alarm signal in correspondence of a missed identification of the back-sight 202 after at least 1 second from the start of the identification phase of the back-sight;
- to stop the filling and to generate an alarm signal in correspondence of a missed sensing of the filling level 203 at the achievement of a total filling at least equal to 100% of the container nominal capacity;
- to stop the filling and to alarm in correspondence of a missed sensing of the filling level 203 after at least 1 minute from the phase activation.

The main advantage of the present invention consists in providing a device for setting the volume of a container having a back-sight with known and high precision and in the total reproducibility of the same operation results.

A further advantage consists in providing a device to fill a container with a predetermined quantity of a liquid.

Another advantage consists in the time reduction needed for making the volume setting and in releasing the operator from said operation.

A further advantage consists in sparing the operators the potential risks inherent the volume setting of the container having a back-sight and to drastically reduce the contamination risk.

A further advantage consists in allowing the volume setting with high precision and repeatability independently of the operator experience and skill.

A further advantage of the present invention consists in providing a device fit to effect correctly the volume setting also using opaque or turbid liquid.

Another advantage of the present invention consists in automatically setting the volume of containers with dimensions, geometric characteristics and transparency and refractive indexes of every type materials and having back-sight with notches with any characteristics.

A further advantage of the present invention consists in providing a method for setting the volume with precision and repeatability containers having a back-sight.

## Claims

1. Device for filling a container (200) provided with a back-sight (202) **characterized in that** includes:
- visual bearing means (30) approximately directed toward the container (200);
- filling means (40) connected with liquid delivering means (50) within the container (200);
- an unit (20) controlling the visual bearing means (30), the filling means (40) and the delivering means (50), fit to activate, in correspondence of a filling condition, in sequence the visual bearing means (30), from which receives signals related to the container (200) according thereof said unit (20) senses the back-sight (202), and the filling means (40) providing by means of the delivering means (50) to pour liquid into said container (200) until the unit (20) deactivates these latter in correspondence of the achievement of the back-sight (202) by the liquid level inside the container (200) recognized following the continuous comparison of the signals received from said visual bearing means (30) related to the back-sight (202) and to the liquid level progressively increasing inside said container (200).

2. Device according to claim 1 **characterized in that** further includes lighting means (60) subjected to the unit (20), and to which are faced the visual bearing means (30) including:
- first window means (63) substantially constituted of transparent material for diffusion and protection;
- light source means (61) powered by light adjusting means (62) fit to vary the bright intensity according to related signals sent by the unit (20) which receives signals of the brightness intensity sensed by the visual bearing means (30) in correspondence of a setting condition in absence of the container (200) and that regulates the brightness intensity of the light source means (61) until having the signals of the brightness intensity corresponding to preset values stored in the same unit (20).

3. Device according to claim 1 **characterized in that** the visual bearing means (30) include:
- second window means (35) substantially constituted of protective transparent material;
- an optical objective (32) associated to optical sensor means (31) connected to the unit (20);
- first translator means (33) suitable for the vertical translation of the optical sensor means (31);
- first actuator means (34) providing the motion to the first translator means (33) and which are activated by the unit (20) fit to regulate, in correspondence of the start of a filling condition, the translation of the optical sensor means (31) until these latter send signals related to the minimum detectable profile of the back-sight (202).

4. Device according to claim 3 **characterized in that** the first translator mean (33) are constituted essentially by a belt (331) vertically fixed between two pulleys (332), one being idle and the remaining being rotated by first actuator means (34).

5. Device according to claim 3 or claim 4 **characterized in that** it further includes at least a stop mean (59) fixed to the upper end of the first translator means (33) and fit for sending related signals to the unit 20, when reached by the optical sensor means (31).

6. Device according to claim 3 **characterized in that** the optical sensor means (31) substantially consist in a charge coupling device of linear type.

7. Device according to claim 1 **characterized in that** the filling means (40) include:
- tank means (42) containing the liquid (204);
- first pipes (91) for withdrawing the liquid (204) from the tank means (42);
- pumping means (41) receiving the liquid (204) from the first pipes (91);
- second pipes (92) connecting in flow communication the pumping means (41) with the delivering means (50).

8. Device according to claim 7 **characterized in that** pumping means (41) substantially consist of a rotating piston reciprocating pump.

9. Device according to claim 7 **characterized in that** the pumping means (41) substantially consist of a magnetic driven gear pump.

10. Device according to claim 7 **characterized in that** the pumping means (41) substantially consist of a peristaltic pump.

11. Device according to any of the claims 7 or 8 or 9 or 10 **characterized in that** further includes an on-off valve (44) for the liquid (204) positioned downstream the pumping means (41) opened by the unit (20) in correspondence of a driving condition of the pumping means (41).

12. Device according to claim 11 **characterized in that** the valve (44) is of clump type.

13. Device according to claim 1 **characterized in that** the delivering means (50) include:
- tube means (52) in flow communication with the seconds pipes (92) and associated to support means (51);
- second translator means (53) to vertically moving the support means (51) fixed thereto;
- second actuator means (54) for moving the second translator means (53) and activated by the unit (20) which, in correspondence of a start filling condition, adjusts the translation of the support means (51) to a predefined level value stored in the unit (20), being the level value provided for inserting the tube means (52) into the mouth portion of the container (200).

14. Device according to claim 13 **characterized in that** the tube means (52) substantially consist of a pipe whose free end is shaped for directing a liquid flow (204) against the inner wall of a mouth portion (201).

15. Device according to claim 13 **characterized in that** the second translator means (53) are constituted essentially by a belt (531) vertically fixed between two pulleys (532), one being idle and the remaining being rotated by first actuator means (54) and further includes at least a stop mean (59) fixed to the upper end of the second translator means (53) suitable to send related signals to the unit (20), when reached by the support means (51).

16. Device according to any of the preceding claims **characterized in that** further includes code scanner means (76) connected to the unit (20) and suitable to read and to send to the unit (20) data related to the containers (200) carried on coding means (77) associated to said containers.

17. Device according to claim 16 **characterized in that** the code scanner means (76) are fixed at the bottom of the positioning seat (104) for the containers (200) carried out in the frame (100) and facing the container (200) through a window (105).

18. Device according to claims 16 or 17 **characterized in that** the coding means (77) have an identifying code of the container type and which is stored in the unit (20) associated with at least one among the total capacity, the levels of the back-sight (202) and of the mouth, transparency and refractive index of the container (200).

19. Device according to claim 1 **characterized in that** the unit (20) is fit to decode the signals sensed by the visual bearing means (30) related to bar codes (78) positioned in correspondence of the mouth portion (201) above the back-sight (202), and carrying data related to the container (200).

20. Device according to claim 1 **characterized in that** the user interface (24) further includes display means (22) for the control of the commands and data input using the keyboard means (23) and for displaying the device status.

21. Device according to claim 1 **characterized in that** the supporting frame (100) has an external cover (101) for containment and protection supporting the user interface means (24) and having an opening (102) in correspondence of the positioning area of the container (200) closed by a door (103).

22. Device according to claims 2, 3, and 20 **characterized in that** the window means, first (63) and second (35), are substantially constituted by transparent and filtering material of the same type; the door (103) is substantially constituted by transparent filtering material of complementary type with respect to the material of the window means, first (63) and second (35).

23. Device according to claim 2 **characterized in that** the light source means (61) comprise at least a vertical LED array.

24. Device according to claim 23 **characterized in that** the light source means (61) comprise two parallel LED array emitting green light.

25. Device according to claim 3 **characterized in that** the optical sensor means (31) are optically orientated according to an offset line passing at a distance in the range of 2 - 10 mm from the centerline of the container (200).

26. Method for filling a container (200), having a mouth portion (201) and a back-sight (202) corresponding to the nominal capacity, with liquid (204) whose free surface forms a horizontal portion defining a filling level (203), said method being **characterized in that** includes:
- to align a point of view at the same level of the back-sight (202) vertically moving the point of view until minimizing the vertical thickness of the back-sight (202);
- to define the middle level of the back-sight (202) as mean between the minimum and maximum levels of the back-sight (202);
- to display a portion of the container underlying the back-sight (202) extended for a length equal to at least the container diameter in correspondence of the back-sight (202);
- to fill the container with a predefined liquid flow (204) ranging from a fourth to the quadruple of the container nominal capacity per minute;
- to stop the filling when the filling level (203) reaches a predefined level underlying the back-sight (202);
- to wait for the fluid stabilization and the exhaustion of possible foams and/or bubbles for a predefined time period ranging between 1 and 60 seconds;
- to fill the container with a defined liquid flow (204) ranging between a fifth and a hundredth of the container nominal capacity per minute;
- to stop the filling when the filling level (203) reaches a level equal to the middle level of the back-sight.

27. Method according to claim 26 **characterized in that** senses the filling level (203) with the liquid (204) in a transparency condition equal to the lower level of a liquid meniscus in the container (200).

28. Method according to claim 26 **characterized in that** senses the filling level (203) with the liquid (204) in an opacity condition like a lower level of a defined amount with respect to the level of a visible line transversally formed by the upper portion of the liquid (202) contacting the inner surface of the container (200).

29. Method according to any of the claims 26 or 27 or 28 **characterized in that** includes:
- to generate an alarm signal in correspondence of a missed identification of the back-sight (202) at least one second after having started the alignment phase of the back-sight;
- to stop the filling and to generate an alarm signal in correspondence of a missed sensing of the filling level (203) when reaching a total filling at least equal to 100% of the container nominal capacity;
- to stop the filling and to generate an alarm signal in correspondence of a missed sensing of the filling level (203) at least 1 minute after having started the alignment phase of the back-sight.
